(19) Europäisches Patentamt
European Patent Office
Office européen des brevets

(11) **EP 3 729 634 B1**

(12) **EUROPÄISCHE PATENTSCHRIFT**

(45) Veröffentlichungstag und Bekanntmachung des Hinweises auf die Patenterteilung:
**29.06.2022 Patentblatt 2022/26**

(21) Anmeldenummer: **18822003.2**

(22) Anmeldetag: **11.12.2018**

(51) Internationale Patentklassifikation (IPC):
**H02P 21/24** (2016.01)   **H02P 6/18** (2016.01)

(52) Gemeinsame Patentklassifikation (CPC):
**H02P 6/186; H02P 6/18; H02P 21/24**

(86) Internationale Anmeldenummer:
**PCT/EP2018/025313**

(87) Internationale Veröffentlichungsnummer:
**WO 2019/120617 (27.06.2019 Gazette 2019/26)**

(54) **VERFAHREN ZUR DREHGEBERLOSEN ROTORLAGEBESTIMMUNG EINER DREHFELDMASCHINE UND VORRICHTUNG ZUR DREHGEBERLOSEN REGELUNG EINES DREHSTROMMOTORS**

METHOD FOR DETERMINING A ROTOR POSITION OF A THREE-PHASE MACHINE WITHOUT USING A ROTARY ENCODER, AND DEVICE FOR CONTROLLING A THREE-PHASE MOTOR WITHOUT USING A ROTARY ENCODER

PROCÉDÉ DE DÉTERMINATION DE LA POSITION D'UN ROTOR D'UNE MACHINE TRIPHASEÉ, SANS L'UTILISATION D'UN ENCODEUR, ET DISPOSITIF DE RÉGULATION D'UN MOTEUR TRIPHASÉ SANS L'UTILISATION D'UN ENCODEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2017 DE 102017012027**

(43) Veröffentlichungstag der Anmeldung:
**28.10.2020 Patentblatt 2020/44**

(73) Patentinhaber: **SEW-EURODRIVE GmbH & Co. KG 76646 Bruchsal (DE)**

(72) Erfinder:
• **HAMMEL, Wolfgang 76703 Kraichtal (DE)**
• **WOLF, Harald 76698 Ubstadt-Weiher (DE)**

(56) Entgegenhaltungen:
**EP-A1- 2 144 362       DE-A1-102008 058 739**
**DE-A1-102010 031 323**

**Beschreibung**

Die Erfindung betrifft ein Verfahren zur Rotorlageidentifikation einer elektrischen Drehfeldmaschine, umfassend einen Rotor und einen Stator, wobei die Drehfeldmaschine über getaktete Klemmspannungen nach dem Verfahren der Pulsweitenmodulation angesteuert wird.

Die Erfindung betrifft weiter eine Vorrichtung zur Steuerung und/oder Regelung einer Drehfeldmaschine, wobei ein Controller zur Durchführung des beschriebenen Verfahrens eingerichtet und ausgebildet ist.

Die erfindungsgemäße Auswertung der identifizierten lokalen Induktivitäten im Hinblick auf die Rotorlage behebt das Stabilitätsproblem bekannter Verfahren in bestmöglicher Weise. Die Ermittlung der lokalen Induktivitäten ist nicht Gegenstand der Erfindung. Hierfür wird auf bekannte Verfahren hingewiesen, welche geeignet sind die lokalen Induktivitäten während des Betriebs der Drehfeldmaschine durch geeignete Injektionsspannungen fortlaufend zu ermitteln.

Infolge des zunehmenden Einsatzes von Drehfeldmotoren anstelle von Gleichstrommotoren gibt es ein starkes Interesse an hochwertigen Regeleinrichtungen für Drehstrommotoren. Mithilfe von Rotorlagesensoren wie Drehimpulsgebern oder Resolvern lassen sich in Verbindung mit Pulswechselrichtern dynamische und effiziente Regelungen von Drehfeldmaschinen realisieren. Nachteilig ist dabei, dass durch den Einsatz von Rotorlagegebern sowohl Kosten, Verkabelungsaufwand als auch die Ausfallwahrscheinlichkeit steigen.

Sogenannte geberlose, drehgeberlose oder sensorlose Verfahren ermitteln die Rotorlage während des Betriebs. Die Rotorlage wird anhand der angelegten Spannungen und gemessenen Motorströme fortlaufend bestimmt. Wesentlicher Bestandteil der Grundwellenverfahren ist die Integration der induzierten Spannungen, welche durch die Drehung des Rotors hervorgerufen werden. Nachteilig ist dabei, dass diese Verfahren aufgrund verschwindender Spannungen bei niedrigen Drehzahlen versagen. Injektionsverfahren nutzen die rotorstellungsabhängigen Induktivitäten der Maschine indem sie beispielsweise die rotorstellungsabhängige Stromantwort auf eine hochfrequente Spannungsanregung auswerten. Dabei wird in der Regel die hochfrequente Spannungsanregung dem Grundwellenspannungszeiger additiv überlagert.

Nachteilig ist bei allen bekannten Injektionsverfahren, dass sie nicht den vollen Informationsgehalt der rotorstellungsabhängigen lokalen Induktivitätsmatrix nutzen, indem beispielsweise lediglich der anisotrope Anteil oder sogar nur die Richtung des anisotropen Anteils der gesamten lokalen Induktivitätsmatrix genutzt wird. Darüber hinaus werden bei den bekannten Verfahren vereinfachende Annahmen über die Anisotropie gemacht. Dies führt leicht zu instabilem Verhalten, sobald die Maschine ein komplizierteres von der Annahme abweichendes anisotropes Verhalten zeigt.

In der Veröffentlichung "Operating Point Dependent Anisotropies and Assessment for Position-Sensorless Control," European Conference on Power Electronics and Applications, Karlsruhe, 05.-09. Sept. 2016 von W.Hammel et.al. wird gezeigt, dass die Parameter der lokalen Induktivitätsmatrix nicht nur von der Rotorstellung und dem momentanen Drehmoment abhängen, sondern insbesondere auch von der Richtung des Grundwellenstromzeigers unmittelbar beeinflusst werden. Für bekannte injektionsbasierte drehgeberlose Regelverfahren mit vereinfachten Annahmen resultiert daraus die dort für einen stabilen Betrieb formulierte Bedingung an die Eigenschaften der genutzten Anisotropie der zu betreibenden Motoren. Werden Verfahren entsprechend dem Stand der Technik bei Motoren angewandt, welche diese Bedingung nicht erfüllen, führt dies zu einem instabilen Betrieb.

Die bekannten Injektionsverfahren können nach der Art der Injektion unterschieden werden. Beispielsweise sind Injektionsverfahren bekannt, welche dem Grundwellenspannungszeiger eine alternierende eindimensionale Injektionsspannung additiv überlagern. Eine einfache darauf basierende Auswertung geht davon aus, dass bei einer permanenterregten Synchronmaschine die Ausrichtung der Anisotropie mit der Richtung der d-Achse des Rotors zusammenfällt. Die alternierende Injektionsspannung wird parallel zur angenommenen Modell d-Achse gewählt. Bei korrekter Ausrichtung ergeben sich die injektionsbedingten Wechselstromanteile parallel zur Injektionsspannung und damit ist die Injektion auch bei großen Injektionsamplituden drehmomentfrei. Weicht dagegen die angenommene Modell d-Achse von der tatsächlichen d-Achse ab, ergeben sich injektionsbedingte Wechselstromanteile mit einer zusätzlichen Komponente senkrecht zur Richtung der Injektionsspannung. Der Modellwinkel kann dann abhängig von dieser senkrechten Stromkomponente vorzeichenrichtig nachgeführt werden. Damit ist eine besonders einfache Art und Weise zur Nachführung des Modellwinkels erreichbar, solange eine Anisotropie mit den angenommenen Eigenschaften vorhanden ist. Bei realen Maschinen wird die Anisotropie aber auch von Betrag und Richtung des Grundwellenstromzeigers abhängen und zu den genannten Stabilitätsproblemen führen.

Unter den bekannten Injektionsverfahren sind auch solche bekannt, welche pro Auswerteintervall Injektionsspannungen in verschiedene Richtungen dem Grundwellenspannungszeiger überlagern.

In der DE102015217986A1 wird beispielsweise ein Injektionsverfahren vorgestellt bei dem die Trajektorie der Injektionsspannungszeigerspitze ein Quadrat bildet. Darauf aufbauend wird dort eine Rechenvorschrift vorgestellt bei der mit sehr wenig Rechenaufwand die Anisotropie als zwei-komponentige Größe ermittelt wird. Allerdings löst auch das dort vorgestellte Verfahren nicht die Problematik möglicher Instabilität bedingt durch die Grundwellenstromabhängigkeit der Anisotropie wie in der Veröffentlichung "Operating Point Dependent Anisotropies and Assessment for Position-Sensorless Control," European Conference on Power Electronics and Applications, Karlsruhe, 05.-09. Sept. 2016 von W.Hammel et.al. aufgezeigt. Im Gegensatz zu einer Injektionsspannung mit alternierendem Spannungszeiger, ist es aber mit diesem Injektionsschema möglich die vollständige differentielle Induktivitätsmatrix zu bestimmen.

Die vorliegende Erfindung löst die Aufgabe, ein verbessertes Verfahren zur Rotorlageidentifikation einer elektrischen Drehfeldmaschine anzugeben, welches für Drehfeldmaschinen mit beliebig gearteten Eigenschaften der gesamten lokalen Induktivitätsmatrix eine in allen Betriebspunkten stabile und rauschunempfindliche Rotorlageidentifikation erlaubt.

Die Erfindung umfasst weiterhin eine entsprechende Vorrichtung zur Regelung oder Steuerung einer Drehfeldmaschine.

Die vorliegende Erfindung basiert auf der Erkenntnis, dass eine optimale Rotorlageidentifikation nur dann erreicht werden kann, wenn alle rotorlageabhängigen Parameter der gesamten lokalen Induktivitätsmatrix gemäß der in der Erfindung offenbarten Weise genutzt werden. Zur Erzielung eines stabilen Betriebs wird die Abhängigkeit der Parameter der lokalen Induktivitätsmatrix von der Ausrichtung des Grundwellenstromzeigers im Regelsystem in erfinderischer Weise genutzt.

Die Erfindung setzt voraus, dass durch eine vorangestellte Methode die vollständige differentielle Induktivitätsmatrix fortlaufend bestimmt wird. Beispielsweise kann das in der DE102015217986A1 beschriebene Injektionsverfahren genutzt werden.

**Aus der** EP 2 144 362 A1 **ist als nächstliegender Stand der Technik ein Verfahren zur Beobachtung der Antriebsgeschwindigkeit eines Permanentmagnet-Läufers in einem Antriebsregelkreis bekannt.**

**Aus der** DE 10 2010 031 323 A1 **ist ein Verfahren zum Betreiben einer Brennkraftmaschine bekannt.**

Die Erfindung wird durch die Merkmale der unabhängigen Ansprüche 1 und 9 definiert.

Bei einer vorteilhaften Ausgestaltung werden als Maß für die lokalen Induktivitäten die lokalen Admittanzen verwendet.

Bei einer vorteilhaften Ausgestaltung wird die Funktionstabelle offline, insbesondere in einem der Lagebestimmung vorangestellten Schritt, insbesondere also vor dem geregelten Betrieb, einmalig, bestimmt, insbesondere festgelegt, wird, so dass online, insbesondere bei der Lagebestimmung, mittels der Funktionstabelle die Zuordnung der Gewichtsfaktoren und des Offsetwerts zu den Werten der beiden Modellgrößen erfolgt.

Bei einer vorteilhaften Ausgestaltung werden zur Bestimmung der Funktionstabelle die lokalen Induktivitäten in Abhängigkeit von Werten der Rotorlage und des Stromzeigers bestimmt, insbesondere wobei diese Werte des Stromzeigers eine Trajektorie darstellen.

Bei einer vorteilhaften Ausgestaltung hängt die Zuordnung der Gewichtsfaktoren und des Offsetwerts zu den Modellgrößen vom rotorstellungsbezogenen Differential der lokalen Induktivitäten oder lokalen Admittanzen ab.

Bei einer vorteilhaften Ausgestaltung wird jeder der mindestens zwei Gewichtsfaktoren als Quotient aus dem Differential eines der Maße und der quadratischen Summe aller Differentiale der Maße gebildet.

Bei einer vorteilhaften Ausgestaltung wird die Zuordnung für den zu subtrahierenden Offsetwert so festgelegt, dass dieser gewichteten Summe dann übereinstimmt, wenn dort der tatsächliche Rotorwinkel der Maschine mit dem Modellwinkel übereinstimmt.

Bei einer vorteilhaften Ausgestaltung werden die Gewichtsfaktoren so gewählt, dass dasjenige Maß, welches die stärksten Exemplarstreuungen aufweist, mit einem geringeren Gewicht versehen wird oder in der gewichteten Summe nicht berücksichtigt wird.

Die Erfindung wird nun anhand eines Ausführungsbeispiels und den folgenden Zeichnungen genauer erläutert:

**Fig.** 1 zeigt den signaltechnischen Zusammenhang zwischen den dem Umrichter bekannten Modellgrößen, der dem Umrichter unbekannten tatsächlichen Rotorstellung und den sich in Abhängigkeit dieser Größen ergebenden messbaren Admittanzparametern.

**Fig.** 2 zeigt den Signalflussplan des beschriebenen Ausführungsbeispiels des erfindungsgemäßen Verfahrens.

Die differentielle Induktivitätsmatrix beschreibt den Zusammenhang zwischen Stromänderungen und der zugehörigen Injektionsspannung $u_c$. Diese Matrix ist symmetrisch und enthält daher drei unabhängige Parameter.

$$u_c = \begin{pmatrix} L_a & L_{ab} \\ L_{ab} & L_b \end{pmatrix} \cdot \frac{d}{dt} i_c \qquad (1)$$

Umgekehrt ist der Stromanstieg als Folge einer angelegten Injektionsspannung $u_c$ durch die inverse Matrix bestimmt.

$$\frac{\mathrm{d}}{\mathrm{d}t} i_{\mathrm{c}} = \begin{pmatrix} L_{\mathrm{a}} & L_{\mathrm{ab}} \\ L_{\mathrm{ab}} & L_{\mathrm{b}} \end{pmatrix}^{-1} \cdot u_{\mathrm{c}} \tag{2}$$

Die Inverse Y der Induktivitätsmatrix *L* wird häufig und auch hier im Folgenden als Admittanzmatrix bezeichnet. Diese ist ebenso symmetrisch und durch die drei Parameter $Y_{\mathrm{a}}$, $Y_{\mathrm{b}}$ , und $Y_{\mathrm{ab}}$ bestimmt.

$$Y = L^{-1} = \begin{pmatrix} L_{\mathrm{a}} & L_{\mathrm{ab}} \\ L_{\mathrm{ab}} & L_{\mathrm{b}} \end{pmatrix}^{-1} = \begin{pmatrix} Y_{\mathrm{a}} & Y_{\mathrm{ab}} \\ Y_{\mathrm{ab}} & Y_{\mathrm{b}} \end{pmatrix} \tag{3}$$

Damit lautet der Zusammenhang zwischen der angelegten Injektionsspannung $u_{\mathrm{c}}$ und dem zugehörigen Stromanstieg wie folgt:

$$\frac{\mathrm{d}}{\mathrm{d}t} i_{\mathrm{c}} = \begin{pmatrix} Y_{\mathrm{a}} & Y_{\mathrm{ab}} \\ Y_{\mathrm{ab}} & Y_{\mathrm{b}} \end{pmatrix} \cdot u_{\mathrm{c}} = Y \cdot u_{\mathrm{c}} \tag{4}$$

Unter Verwendung der Ersetzungen (5a) - (5c) lässt sich die Admittanzmatrix wie in (6) dargestellt zerlegen.

$$Y_{\Sigma} = \frac{Y_{\mathrm{a}} + Y_{\mathrm{b}}}{2} \tag{5a}$$

$$Y_{\Delta\mathrm{a}} = \frac{Y_{\mathrm{a}} - Y_{\mathrm{b}}}{2} \tag{5b}$$

$$Y_{\Delta\mathrm{b}} = Y_{\mathrm{ab}} \tag{5c}$$

$$Y = \begin{pmatrix} Y_{\mathrm{a}} & Y_{\mathrm{ab}} \\ Y_{\mathrm{ab}} & Y_{\mathrm{b}} \end{pmatrix} = Y_{\Sigma} \cdot \begin{pmatrix} 1 & 0 \\ 0 & 1 \end{pmatrix} + Y_{\Delta\mathrm{a}} \cdot \begin{pmatrix} 1 & 0 \\ 0 & -1 \end{pmatrix} + Y_{\Delta\mathrm{b}} \cdot \begin{pmatrix} 0 & 1 \\ 1 & 0 \end{pmatrix} \tag{6}$$

In dieser Zerlegung repräsentiert $Y_{\Sigma}$ den isotropen Anteil der Admittanzmatrix. Der anisotrope Anteil hingegen ist eine Größe mit Betrag und Richtung, welcher in (6) durch seine kartesischen Komponenten $Y_{\Delta\mathrm{a}}$ und $Y_{\Delta\mathrm{b}}$ repräsentiert wird.

Das Ausführungsbeispiel soll für eine permanent-erregte Synchronmaschine gelten. Für eine solche Maschine kann z.B. unter Zuhilfenahme einer Quadrat-Injektion die lokale Induktivitätsmatrix bzw. die lokale Admittanzmatrix in ihrer Zerlegung nach (6) bestimmt werden. Die isotrope Komponente $Y_{\Sigma}$ lässt sich aus der ersten Komponente von Gleichung (31) in der DE102015217986A1 wie folgt ermitteln:

$$Y_{\Sigma} = \frac{\Delta i_{\Sigma x}}{u_{\mathrm{c}} \cdot \Delta t} = \frac{1}{4 \cdot u_{\mathrm{c}} \cdot \Delta t} \cdot (\Delta i_{\mathrm{u}\alpha 0} + \Delta i_{\mathrm{u}\beta 1} - \Delta i_{\mathrm{u}\alpha 2} - \Delta i_{\mathrm{u}\beta 3}) \tag{7}$$

Dies lässt sich vereinfachen zu (8), wodurch die isotrope Komponente $Y_{\Sigma}$ direkt aus den gemessenen Stromanstiegen bestimmt werden kann.

$$Y_{\Sigma} = \frac{1}{4 \cdot u_{\mathrm{c}} \cdot \Delta t} \cdot (\Delta i_{\alpha 0} + \Delta i_{\beta 1} - \Delta i_{\alpha 2} - \Delta i_{\beta 3}) \tag{8}$$

Die zweite Komponente $\Delta i_{\Sigma y}$ von Gleichung (31) in der DE102015217986A1 ist abgesehen von Messfehlern Null.

Die anisotropen Komponenten $Y_{\Delta\mathrm{a}}$, und $Y_{\Delta\mathrm{b}}$ ergeben sich aus den Komponenten der Vektorgleichung (43) in der DE102015217986A1 wie folgt:

$$Y_{\Delta\mathrm{a}} = \frac{1}{4 \cdot u_{\mathrm{c}} \cdot \Delta t} \cdot (\Delta i_{\alpha 0} - \Delta i_{\beta 1} - \Delta i_{\alpha 2} + \Delta i_{\beta 3}) \tag{9}$$

$$Y_{\Delta \text{b}} = \frac{1}{4 \cdot u_c \cdot \Delta t} \cdot (\Delta i_{\beta 0} + \Delta i_{\alpha 1} - \Delta i_{\beta 2} - \Delta i_{\alpha 3}) \tag{10}$$

Die Bestimmung der Admittanzkomponenten $Y_{\Sigma}$, $Y_{\Delta \text{a}}$ und $Y_{\Delta \text{b}}$ ist auch möglich unter Verwendung anderer Verläufe der Injektionsspannung wie z.B. einer rotierenden Injektion wie sie z.B. in der Veröffentlichung "A Comparative Analysis of Pulsating vs. Rotating Vector Carrier Signal Injection-Based Sensorless Control," Applied Power Electronics Conference and Exposition, Austin, 24.-28. Feb. 2008, pp. 879-885 von D. Raca et.al. beschrieben ist. Die Bestimmung der drei Parameter der Admittanzmatrix bildet die Grundlage für das erfindungsgemäße Verfahren zur Rotorlageidentifikation. Selbstverständlich ist die Durchführung des erfindungsgemäßen Verfahrens nicht an die gewählte Form bzw. Zerlegung in (6) gebunden. Vielmehr kann hierfür jede andere Darstellungsform der in der Admittanzmatrix enthaltenen Information als Grundlage verwendet werden.

Insbesondere ist es möglich, zur Durchführung des erfindungsgemäßen Verfahrens drei beliebige Linearkombinationen aus den Admittanzkomponenten $Y_\text{a}$, $Y_\text{b}$, und $Y_\text{ab}$ bzw. $Y_{\Sigma}$, $Y_{\Delta \text{a}}$ und $Y_{\Delta \text{b}}$ zu erfassen, sofern diese untereinander linear unabhängig sind.

Wesentlicher Bestandteil ist die geeignete Nutzung der Erkenntnis, dass die drei Parameter $Y_{\Sigma}$, $Y_{\Delta \text{a}}$ und $Y_{\Delta \text{b}}$ der lokalen Admittanzmatrix nicht nur von der Rotorstellung $\theta_\text{r}$ abhängen, sondern auch betriebspunktabhängig von den Komponenten $i_\text{d}$ und $i_\text{q}$ des momentanen Grundwellenstromzeigers abhängen, also durch dessen Betrag und Richtung beeinflusst werden.

$$Y_{\Sigma} = Y_{\Sigma}(\theta_\text{r}, i_\text{d}, i_\text{q}) \tag{11}$$

$$Y_{\Delta \text{a}} = Y_{\Delta \text{a}}(\theta_\text{r}, i_\text{d}, i_\text{q}) \tag{12}$$

$$Y_{\Delta \text{b}} = Y_{\Delta \text{b}}(\theta_\text{r}, i_\text{d}, i_\text{q}) \tag{13}$$

wobei $\theta_\text{r}$ den elektrischen Winkel der Rotorstellung und $i_\text{d}$ bzw. $i_\text{q}$ die Komponenten des Grundwellenstromzeigers darstellen.

Die folgenden Betrachtungen beschränken sich auf den Grunddrehzahlbereich. Hier wird die Maschine üblicherweise mit einem drehmomentbildenden Strom auf der q-Achse, d.h. $i_\text{d} = 0$ oder entlang einer MTPA-Trajektorie (Maximum-Torque-Per-Ampere) betrieben, welche eine feste Zuordnung des d-Stroms in Abhängigkeit des q-Stroms vorgibt. Dies wird z.B. in "Elektrische Antriebe - Regelung von Antriebssystemen," 3rd ed., Berlin, Springer 2009 von D.Schröder beschrieben. Der Betrieb der Maschine erfolgt demnach entsprechend (14) oder (15).

$$i_\text{d} = 0 \tag{14}$$

bzw.

$$i_\text{d} = i_{\text{d,MTPA}}(i_\text{q}) \tag{15}$$

Hierdurch beschränkt man sich bei der Vorgabe der Betriebspunkte durch den Umrichter auf zwei verbleibende Freiheitsgrade, nämlich den elektrischen Rotorwinkel $\theta_\text{r}$ und den q-Strom $i_\text{q}$, während der zugehörige d-Strom $i_\text{d}$ aus einer festen Zuordnung beispielsweise nach (14) oder (15) aus dem q-Strom entsteht. Für Betriebspunkte nach dieser Vorgabe reduziert sich auch die Abhängigkeit der Admittanzparameter $Y_{\Sigma}$, $Y_{\Delta \text{a}}$ und $Y_{\Delta \text{b}}$ auf nur noch zwei unabhängige Größen $\theta_\text{r}$ und $i_\text{q}$ :

$$Y_{\Sigma} = Y_{\Sigma}(\theta_\text{r}, i_\text{d}(i_\text{q}), i_\text{q}) = Y_{\Sigma}(\theta_\text{r}, i_\text{q}) \tag{16}$$

$$Y_{\Delta \text{a}} = Y_{\Delta \text{a}}(\theta_\text{r}, i_\text{d}(i_\text{q}), i_\text{q}) = Y_{\Delta \text{a}}(\theta_\text{r}, i_\text{q}) \tag{17}$$

$$Y_{\Delta \text{b}} = Y_{\Delta \text{b}}(\theta_\text{r}, i_\text{d}(i_\text{q}), i_\text{q}) = Y_{\Delta \text{b}}(\theta_\text{r}, i_\text{q}) \tag{18}$$

Beim drehgeberlosen Betrieb des Motors an einem Umrichter kommt es unweigerlich auch zu Abweichungen zwischen dem tatsächlichen elektrischen Rotorwinkel $\theta_r$ und dem zugehörigen Modell-Rotorwinkel $\theta_{r,mod}$ im Umrichter. Auch wenn diese idealerweise sehr klein ausfallen, kann dies wie in "Operating Point Dependent Anisotropies and Assessment for Position-Sensorless Control," European Conference on Power Electronics and Applications, Karlsruhe, 05.-09. Sept. 2016 von W.Hammel et.al. beschrieben, bei drehgeberlosen Verfahren nach dem Stand der Technik zu instabilem Betrieb führen.

Der Umrichter wird zur Orientierung des einzuprägenden Grundwellenstromzeigers nur auf den Modell-Rotorwinkel $\theta_{r,mod}$ zurückgreifen können. Stimmt dieser nicht mit dem tatsächlichen elektrischen Rotorwinkel $\theta_r$ überein, führt dies dazu, dass die tatsächlichen d und q-Stromkomponenten nicht mehr mit den entsprechenden Modellgrößen übereinstimmen. Die tatsächlich im Motor fließenden d- und q-Stromkomponenten $i_d$ und $i_q$ hängen nun von den Modellgrößen im Umrichter $i_{d,mod}$ und $i_{q,mod}$ sowie dem Fehler des Modell-Rotorwinkels $\tilde{\theta}_r$ wie folgt ab:

$$i_{\mathrm{d}} = i_{\mathrm{d,mod}} \cdot \cos(\tilde{\theta}_{\mathrm{r}}) - i_{\mathrm{q,mod}} \cdot \sin(\tilde{\theta}_{\mathrm{r}}) \tag{19}$$

$$i_{\mathrm{q}} = i_{\mathrm{q,mod}} \cdot \cos(\tilde{\theta}_{\mathrm{r}}) + i_{\mathrm{d,mod}} \cdot \sin(\tilde{\theta}_{\mathrm{r}}) \tag{20}$$

$$\tilde{\theta}_{\mathrm{r}} = \theta_{\mathrm{r,mod}} - \theta_{\mathrm{r}} \tag{21}$$

Bei Vorhandensein eines Fehlers des Modell-Rotorwinkels $\tilde{\theta}_r$ findet die Zuordnung nach (14) bzw. (15) nicht zwischen den tatsächlichen q- und d-Stromkomponenten statt, sondern es wird der Modell-d-Strom $i_{d,mod}$ in Abhängigkeit des Modell-q-Stroms $i_{q,mod}$ gebildet:

$$i_{\mathrm{d,mod}} = 0 \tag{22}$$

bzw.

$$i_{\mathrm{d,mod}} = i_{\mathrm{d,MTPA}}(i_{\mathrm{q,mod}}) \tag{23}$$

Da die Admittanzparameter entsprechend (11) - (13) von den tatsächlichen d- und q-Strömen $i_d$ und $i_q$ abhängen, werden diese nun gegenüber (16) - (18) eine zusätzliche Abhängigkeit vom Fehler des Modell-Rotorwinkels $\tilde{\theta}_r$ bzw. dem Modell-Rotorwinkel $\theta_{r,mod}$ aufweisen:

$$Y_{\Sigma} = Y_{\Sigma}(\theta_{\mathrm{r}}, i_{\mathrm{q,mod}}, \tilde{\theta}_{\mathrm{r}}) \tag{24}$$

$$Y_{\Delta\mathrm{a}} = Y_{\Delta\mathrm{a}}(\theta_{\mathrm{r}}, i_{\mathrm{q,mod}}, \tilde{\theta}_{\mathrm{r}}) \tag{25}$$

$$Y_{\Delta\mathrm{b}} = Y_{\Delta\mathrm{b}}(\theta_{\mathrm{r}}, i_{\mathrm{q,mod}}, \tilde{\theta}_{\mathrm{r}}) \tag{26}$$

bzw.

$$Y_{\Sigma} = Y_{\Sigma}(\theta_{\mathrm{r}}, i_{\mathrm{q,mod}}, \theta_{\mathrm{r,mod}}) \tag{27}$$

$$Y_{\Delta\mathrm{a}} = Y_{\Delta\mathrm{a}}(\theta_{\mathrm{r}}, i_{\mathrm{q,mod}}, \theta_{\mathrm{r,mod}}) \tag{28}$$

$$Y_{\Delta\mathrm{b}} = Y_{\Delta\mathrm{b}}(\theta_{\mathrm{r}}, i_{\mathrm{q,mod}}, \theta_{\mathrm{r,mod}}) \tag{29}$$

Somit hängen die messbaren Admittanzparameter $Y_{\Sigma}$, $Y_{\Delta\mathrm{a}}$ und $Y_{\Delta\mathrm{b}}$ sowohl von den beiden im Umrichter bekannten Modellgrößen $i_{q,mod}$ und $\theta_{r,mod}$ als auch von einer weiteren dem Umrichter unbekannten Größe, nämlich dem tatsächlichen Rotorwinkel $\theta_r$ ab.

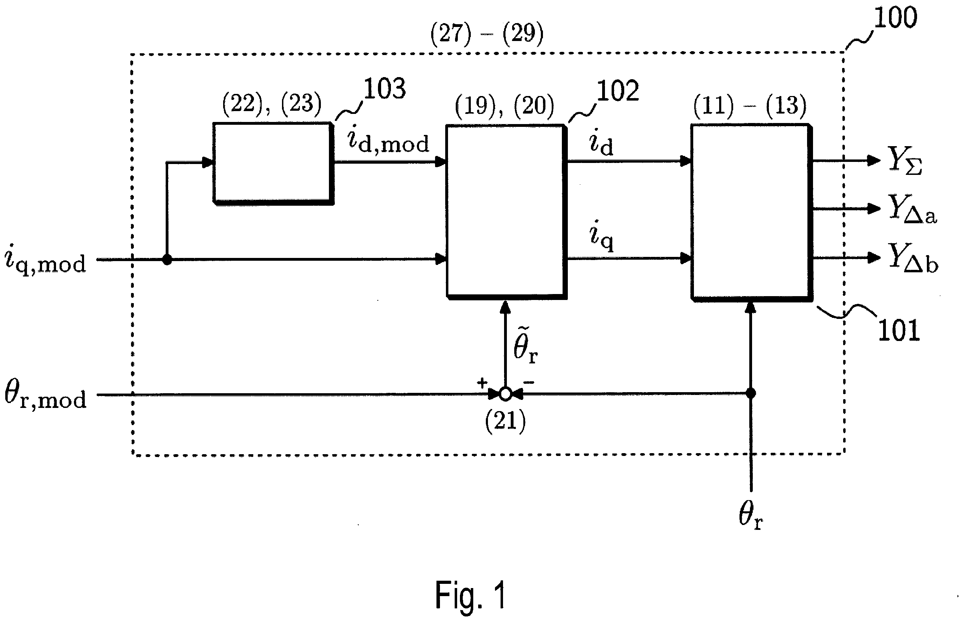

In Fig. 1 ist das innere Zusammenwirken der wesentlichen Gleichungen aufgezeigt, welche in ihrer Gesamtheit zu den Abhängigkeiten (27) - (29) führen. Hier sind in Klammern jeweils die Nummern der Gleichungen angegeben, welche die jeweiligen Zusammenhänge wiedergeben.

Der Modell-d-Strom $i_{d,mod}$ entsteht aus dem Modell-q-Strom $i_{q,mod}$ entsprechend der gewählten MTPA-Kennlinie **103** nach den Gleichungen (22) bzw. (23). Die tatsächlichen

Motor-Stromkomponenten $i_d$ und $i_q$ ergeben sich aus den Modell-Stromkomponenten $i_{d,mod}$ und $i_{q,mod}$ durch die Transformation von Modell-Rotorkoordinaten in tatsächliche Rotorkoordinaten **102** gemäß den Gleichungen (19) und (20) unter Verwendung des Fehlwinkels $\tilde{\theta}_r$. Der Fehler des Modell-Rotorwinkels $\tilde{\theta}_r$ ist gemäß (21) die Differenz zwischen dem Modell-Rotorwinkel $\theta_{r,mod}$ und dem tatsächlichen Rotorwinkel $\theta_r$. Schließlich werden innerhalb der Drehfeldmaschine die messbaren Admittanzparameter $Y_\Sigma$, $Y_{\Delta a}$ und $Y_{\Delta b}$ in Abängigkeit der tatsächlichen Stromkomponenten $i_d$ und $i_q$ sowie der tatsächlichen Rotorstellung $\theta_r$ gemäß den Gleichungen (11) - (13) durch die Abbildung **101** gebildet.

Insgesamt ergibt sich somit eine Abbildung **100** der Modellgröße des q-Stroms $i_{q,mod}$ und des Modell-Rotorwinkels $\theta_{r,mod}$ sowie des tatsächlichen Rotorwinkels $\theta_r$ auf die messbaren Admittanzparameter $Y_\Sigma$, $Y_{\Delta a}$ und $Y_{\Delta b}$ gemäß den Gleichungen (27) - (29).

Entscheidend ist die Erkenntnis, dass ein Fehler des Modell-Rotorwinkels zwar die Admittanzparameter beeinflusst, aber diese trotzdem durch ein Injektionsverfahren unverfälscht gemessen werden können.

Aufgrund dieser Erkenntnis ist es grundsätzlich möglich, die gemessen Admittanzparameter zur Rotorlageidentifikation heranzuziehen. Sehr einfach realisierbar wäre dies, wenn eine der Beziehungen (27) - (29) eindeutig umkehrbar nach dem Rotorwinkel $\theta_r$ aufgelöst werden könnte. Dies ist aber im Allgemeinen für keine der drei Größen der Fall.

In jedem Fall ist es aber notwendig, die Abhängigkeiten der Admittanzparameter vom Betriebspunkt gemäß (11)-(13) zu kennen. Diese können z.B. durch eine vorhergehende Offline-Messung ermittelt werden, wobei dann auch Messmittel zur Rotorlagebestimmung verwendet werden können. Zur Realisierung ist es jedoch nicht erforderlich, diese über der gesamten d-q-Stromebene zu bestimmen. Wird die Maschine auf einer Stromtrajektorie nach (22) bzw. (23) betrieben und wird weiter vorausgesetzt, dass die im Betrieb auftretenden Fehlwinkel klein bleiben, ist es ausreichend, die Admittanzparameter auf der Stromtrajektorie und in deren Umgebung zu ermitteln.

Das in "Operating Point Dependent Anisotropies and Assessment for Position-Sensorless Control," European Conference on Power Electronics and Applications, Karlsruhe, 05.-09. Sept. 2016 von W.Hammel et.al. beschriebene Stabilitätsproblem wird dadurch gelöst, dass zunächst ein umrichterinternes Fehlersignal $\delta_F$ aus den dem Umrichter zur Verfügung stehenden Größen $\theta_{r,mod}$ und $i_{q,mod}$, sowie den gemessenen Admittanzparametern $Y_\Sigma$, $Y_{\Delta a}$, und $Y_{\Delta b}$ gebildet wird, womit dieses Fehlersignal selbst auch wieder nur vom dem Umrichter bekannten Modell-q-Strom $i_{q,mod}$ und dem ModellRotorwinkel $\theta_{r,mod}$ sowie von dem unbekannten Rotorwinkel $\theta_r$ abhängt:

$$\delta_F = \delta_F(\theta_r, i_{q,mod}, \theta_{r,mod}) \tag{30}$$

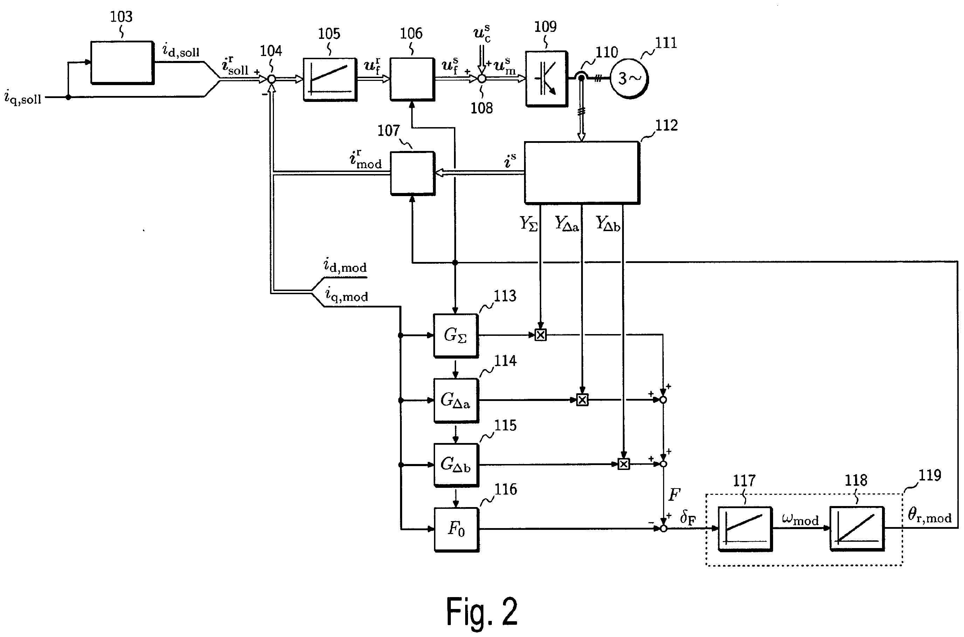

Dieses Signal wird so gebildet, dass es ein Maß für die Abweichung des Modell-Rotorwinkels $\theta_{r,mod}$ vom tatsächlichen Rotorwinkel $\theta_r$ ist, und dieses Signal einem Regler zugeführt wird, welcher den Modellwinkel $\theta_{r,mod}$ dem tatsächlichen Rotorwinkel nachführt. Dies kann z.B. durch eine einfache PLL-Regelschleife erfolgen. Alternativ kann das Fehlersignal $\delta_F$ als Korrektur-Eingriff in ein Grundwellenmodell genutzt werden, das dadurch auch im niedrigen Drehzahlbereich und im Stillstand anwendbar wird. Erfindungsgemäß wird das Fehlersignal $\delta_F$ gemäß Fig. 2 erzeugt, in dem zunächst ein Summensignal F gebildet wird, welches eine gewichtete Summe der drei gemessenen Admittanzparameter ist:

$$F = G_\Sigma \cdot Y_\Sigma + G_{\Delta a} \cdot Y_{\Delta a} + G_{\Delta b} \cdot Y_{\Delta b} \tag{31}$$

Von diesem Summensignal F wird eine Größe $F_0$ abgezogen, wodurch sich das Fehlersignal $\delta_F$ ergibt:

$$\delta_F = F - F_0 \tag{32}$$

Dabei sind die Gewichte $G_\Sigma$, $G_{\Delta a}$ und $G_{\Delta b}$ sowie die Größe $F_0$ in der Regel keine Konstanten sondern betriebspunktabhängige Werte. Bemerkenswert ist dabei, dass es nicht notwendig ist, zur Bestimmung dieser Größen den tatsächlichen Betriebspunkt $\theta_r$, $i_d$ und $i_q$ heranzuziehen. Vielmehr führt die Verwendung des - möglicherweise fehlerbehafteten - Modellbetriebspunktes $\theta_{r,mod}$ und $i_{q,mod}$ dennoch im Ergebnis zu einem stabilen Betrieb, und zwar auch bei einem nicht verschwindenden Fehlwinkel.

Somit sind die Größen $G_\Sigma$, $G_{\Delta a}$ $G_{\Delta b}$ und $F_0$ allgemeine Funktionen der Modellgrößen:

$$G_\Sigma = G_\Sigma(i_{q,\mathrm{mod}}, \theta_{r,\mathrm{mod}}) \tag{33}$$

$$G_{\Delta a} = G_{\Delta a}(i_{q,\mathrm{mod}}, \theta_{r,\mathrm{mod}}) \tag{34}$$

$$G_{\Delta b} = G_{\Delta b}(i_{q,\mathrm{mod}}, \theta_{r,\mathrm{mod}}) \tag{35}$$

$$F_0 = F_0(i_{q,\mathrm{mod}}, \theta_{r,\mathrm{mod}}) \tag{36}$$

Abhängig von der Gestalt dieser Funktionen $G_\Sigma$, $G_{\Delta a}$, $G_{\Delta b}$ und $F_0$ ist für deren Speicherung oder Berechnung im Umrichter eine tabellarische oder funktionale Abbildung oder eine Kombination aus Beidem sinnvoll. Im Weiteren wird von einer tabellarisch abgelegten Abhängigkeit der Werte $G_\Sigma$, $G_{\Delta a}$ $G_{\Delta b}$ und $F_0$ vom Modellbetriebspunkt ausgegangen.

Für das Fehlersignal $\delta_F$ ergibt sich damit, dass dieses von den Modellgrößen $i_{q,\mathrm{mod}}$ und $\theta_{r,\mathrm{mod}}$ sowie dem tatsächlichen Rotorwinkel $\theta_r$ abhängt:

$$\delta_F = \delta_F(\theta_r, i_{q,\mathrm{mod}}, \theta_{r,\mathrm{mod}}) \tag{37}$$

Entscheidend ist die Erkenntnis, dass es möglich ist, die Funktionen $G_\Sigma$, $G_{\Delta a}$ $G_{\Delta b}$ und $F_0$ so zu gestalten, und zwar ausschließlich in Abhängigkeit der Modellgrößen, dass das Fehlersignal $\delta_F$ folgende Eigenschaften erhält

$$\left.\frac{\partial}{\partial \theta_r} \delta_F(\theta_r, i_{q,\mathrm{mod}}, \theta_{r,\mathrm{mod}})\right|_{\theta_{r,\mathrm{mod}}=\theta_r} = 1 \tag{38}$$

$$\left.\frac{\partial}{\partial \theta_{r,\mathrm{mod}}} \delta_F(\theta_r, i_{q,\mathrm{mod}}, \theta_{r,\mathrm{mod}})\right|_{\theta_{r,\mathrm{mod}}=\theta_r} = -1 \tag{39}$$

$$\left.\delta_F(\theta_r, i_{q,\mathrm{mod}}, \theta_{r,\mathrm{mod}})\right|_{\theta_{r,\mathrm{mod}}=\theta_r} = 0 \tag{40}$$

und dieses infolge der genannten Eigenschaften einen stabilen Betrieb ermöglicht.

Die geforderte Eigenschaft gemäß Gleichung (38) sagt also aus, wie das Fehlersignal $\delta_F$ ausgehend vom ausgeregelten Betriebspunkt $\theta_{r,\mathrm{mod}} = \theta_r$ bei festgehaltenem Modellwinkel $\theta_{r,\mathrm{mod}}$ auf eine Änderung des tatsächlichen Rotorwinkels $\theta_r$ zu reagieren hat, nämlich mit Steigung 1 bei Änderung des tatsächlichen Rotorwinkels $\theta_r$.

Die geforderte Eigenschaft gemäß Gleichung (39) sagt weiter aus, wie das Fehlersignal $\delta_F$ ausgehend vom ausgeregelten Betriebspunkt $\theta_{r,\mathrm{mod}} = \theta_r$ bei festgehaltenem tatsächlichem Rotorwinkel $\theta_r$ auf eine Änderung des Modellwinkels $\theta_{r,\mathrm{mod}}$ zu reagieren hat, nämlich mit Steigung -1 bei Änderung des Modellwinkels $\theta_{r,\mathrm{mod}}$.

Damit wird das Fehlersignal $\delta_F$ in der Nähe des ausgeregelten Betriebspunktes $\theta_{r,\mathrm{mod}} = \theta_r$ proportional zum Fehlwinkel $\tilde{\theta}_r = \theta_{r,\mathrm{mod}} - \theta_r$ und ist somit geeignet, den Modellwinkel mit Hilfe eines Regelkreises dem tatsächlichen Motorwinkel nachzuführen.

Aus den geforderten Eigenschaften (38) und (39) des Fehlersignals $\delta_F$ folgt außerdem, dass für alle ausgeregelten Betriebspunkte $\theta_{r,\mathrm{mod}} = \theta_r$ unabhängig von der Rotorstellung $\theta_r$ und dem Modell-q-Strom $i_q$ der Wert des Fehlersignals $\delta_F$ konstant ist, z.B. wie (40) gewählt, konstant Null.

In einem weiteren erfinderischen Schritt werden nun $G_\Sigma$, $G_{\Delta a}$ $G_{\Delta b}$ und $F_0$ so in Abhängigkeit der Modellgrößen $i_{q,\mathrm{mod}}$ und $\theta_{r,\mathrm{mod}}$ gestaltet, dass das Fehlersignal $\delta_F$ nach (31) und (32) die geforderten Eigenschaften nach (38) - (40) aufweist.

Dies wird erreicht, indem $G_\Sigma$, $G_{\Delta a}$, $G_{\Delta b}$ und $F_0$ wie folgt ausgeführt werden:

$$G_\Sigma(i_{q,mod}, \theta_{r,mod}) = \frac{D_\Sigma(i_{q,mod}, \theta_{r,mod})}{D_\Sigma^2(i_{q,mod}, \theta_{r,mod}) + D_{\Delta a}^2(i_{q,mod}, \theta_{r,mod}) + D_{\Delta b}^2(i_{q,mod}, \theta_{r,mod})} \tag{41}$$

$$G_{\Delta a}(i_{q,mod}, \theta_{r,mod}) = \frac{D_{\Delta a}(i_{q,mod}, \theta_{r,mod})}{D_\Sigma^2(i_{q,mod}, \theta_{r,mod}) + D_{\Delta a}^2(i_{q,mod}, \theta_{r,mod}) + D_{\Delta b}^2(i_{q,mod}, \theta_{r,mod})} \tag{42}$$

$$G_{\Delta b}(i_{q,mod}, \theta_{r,mod}) = \frac{D_{\Delta b}(i_{q,mod}, \theta_{r,mod})}{D_\Sigma^2(i_{q,mod}, \theta_{r,mod}) + D_{\Delta a}^2(i_{q,mod}, \theta_{r,mod}) + D_{\Delta b}^2(i_{q,mod}, \theta_{r,mod})} \tag{43}$$

$$F_0(i_{q,mod}, \theta_{r,mod}) = \frac{\begin{array}{l} D_\Sigma(i_{q,mod}, \theta_{r,mod}) \cdot Y_\Sigma(i_{q,mod}, \theta_{r,mod}) + \\ D_{\Delta a}(i_{q,mod}, \theta_{r,mod}) \cdot Y_{\Delta a}(i_{q,mod}, \theta_{r,mod}) + \\ D_{\Delta b}(i_{q,mod}, \theta_{r,mod}) \cdot Y_{\Delta b}(i_{q,mod}, \theta_{r,mod}) \end{array}}{D_\Sigma^2(i_{q,mod}, \theta_{r,mod}) + D_{\Delta a}^2(i_{q,mod}, \theta_{r,mod}) + D_{\Delta b}^2(i_{q,mod}, \theta_{r,mod})} \tag{44}$$

Dabei stellen $D_\Sigma$, $D_{\Delta a}$ und $D_{\Delta b}$ die Differentiale der lokalen Admittanzparameter $Y_\Sigma$, $Y_{\Delta a}$ und $Y_{\Delta b}$ nach der Rotorstellung $\theta_r$ dar. Sind die Abhängigkeiten der lokalen Admittanzparameter nach (27) - (29) wie oben beschrieben bestimmt, dann lassen sich auch deren Differentiale $D_\Sigma$, $D_{\Delta a}$ und $D_{\Delta b}$ nach der Rotorstellung $\theta_r$ für den ausgeregelten Betriebspunkt angeben:

$$D_\Sigma(i_{q,mod}, \theta_{r,mod}) = \left. \frac{\partial}{\partial \theta_r} Y_\Sigma(\theta_r, i_{q,mod}, \theta_{r,mod}) \right|_{\theta_r = \theta_{r,mod}} \tag{45}$$

$$D_{\Delta a}(i_{q,mod}, \theta_{r,mod}) = \left. \frac{\partial}{\partial \theta_r} Y_{\Delta a}(\theta_r, i_{q,mod}, \theta_{r,mod}) \right|_{\theta_r = \theta_{r,mod}} \tag{46}$$

$$D_{\Delta b}(i_{q,mod}, \theta_{r,mod}) = \left. \frac{\partial}{\partial \theta_r} Y_{\Delta b}(\theta_r, i_{q,mod}, \theta_{r,mod}) \right|_{\theta_r = \theta_{r,mod}} \tag{47}$$

Wird für die Beschreibung der Admittanzparameter die alternative Darstellung nach (24) - (26) verwendet, also in Abhängigkeit des tatsächlichen Rotorwinkels $\theta_r$, des Modell-q-Stroms $i_{q,mod}$ und des Fehlwinkels $\tilde{\theta}_r$, so stellen sich die relevanten Differentiale wie folgt dar:

$$D_\Sigma(i_{q,mod}, \theta_{r,mod}) = \left[ \frac{\partial}{\partial \theta_r} Y_\Sigma(\theta_r, i_{q,mod}, \tilde{\theta}_r) - \frac{\partial}{\partial \tilde{\theta}_r} Y_\Sigma(\theta_r, i_{q,mod}, \tilde{\theta}_r) \right]_{\theta_r = \theta_{r,mod}, \tilde{\theta}_r = 0} \tag{48}$$

$$D_{\Delta a}(i_{q,mod}, \theta_{r,mod}) = \left[ \frac{\partial}{\partial \theta_r} Y_{\Delta a}(\theta_r, i_{q,mod}, \tilde{\theta}_r) - \frac{\partial}{\partial \tilde{\theta}_r} Y_{\Delta a}(\theta_r, i_{q,mod}, \tilde{\theta}_r) \right]_{\theta_r = \theta_{r,mod}, \tilde{\theta}_r = 0} \tag{49}$$

$$D_{\Delta b}(i_{q,mod}, \theta_{r,mod}) = \left[ \frac{\partial}{\partial \theta_r} Y_{\Delta b}(\theta_r, i_{q,mod}, \tilde{\theta}_r) - \frac{\partial}{\partial \tilde{\theta}_r} Y_{\Delta b}(\theta_r, i_{q,mod}, \tilde{\theta}_r) \right]_{\theta_r = \theta_{r,mod}, \tilde{\theta}_r = 0} \tag{50}$$

Die nach (41) - (44) in Verbindung mit (45) - (47) oder mit (48) - (50) gewählte Festlegung der Werte $G_\Sigma$, $G_{\Delta a}$, $G_{\Delta b}$ und $F_0$ erfüllt für das Fehlersignal nicht nur die Bedingungen (38) - (40) sondern ergibt darüber hinaus auch das bestmögliche Signal-Rausch-Verhältnis für das Fehlersignal $\delta_F$, sofern man unterstellt, dass die Messwerte der Admittanzparameter $Y_\Sigma$, $Y_{\Delta a}$ und $Y_{\Delta b}$ unkorreliert, normalverteilt und mit gleicher Standardabweichung rauschen.

Es kann z.B. in folgenden Varianten von obiger Festlegung abgewichen werden:

1. Eine für das Signal-Rausch-Verhältnis nicht optimale Festlegung der $G_\Sigma$, $G_{\Delta a}$, $G_{\Delta b}$ und $F_0$, sodass dennoch die

Eigenschaften (38) - (40) für das Fehlersignal $\delta_F$ erfüllt sind.

2. Eine Festlegung, sodass das Fehlersignal $\delta_F$ für ein anderes Rauschverhalten der gemessenen Admittanzparameter rauschoptimal wird. Die gemessenen Admittanzparameter können z.B. mit unterschiedlicher Standardabweichung rauschen oder das Rauschen der einzelnen Admittanzparameter erfolgt nicht unkorreliert, sondern korreliert zueinander oder die Admittanzparameter rauschen nach einer anderen Verteilung als der Normalverteilung. Es gibt auch unter diesen Voraussetzungen jeweils eine Festlegung für die Abhängigkeit der Werte $G_\Sigma$, $G_{\Delta a}$, $G_{\Delta b}$ und $F_0$ von den Modellgrößen, für welche das Fehlersignal $\delta_F$ ein optimales Signal-Rausch-Verhältnis aufweist.

3. Eine Festlegung, sodass die Ableitungen in (38) - (39) nicht konstant +/-1 sind, sondern hiervon abweichen oder sogar betriebspunkt-abhängig variieren. In diesem Fall resultiert für den Regelkreis, welcher die modellierte Rotorstellung nachführt, eine betriebspunktabhängige Regelkreisverstärkung und somit ein betriebspunktabhängiges Einschwingverhalten.

4. Eine Festlegung, bei der ein einzelnes Gewicht z.B. $G_\Sigma$ betragsmäßig geringer oder sogar bis hin zu Null gewählt wird. Dies wäre z.B. dann sinnvoll, wenn der zugehörige Admittanzparameter starke Exemplarstreuungen aufweist und verschiedene Exemplare aus einem Ensemble von gleichen Motoren mit einem einzigen Parametersatz betrieben werden sollen. Dabei unterscheiden sich die einzelnen Exemplare des Ensembles hinsichtlich des betreffenden Admittanzparameters auf Grund von Fertigungstoleranzen.

5. Eine Festlegung der Werte $G_\Sigma$, $G_{\Delta a}$, $G_{\Delta b}$ und $F_0$ in Abhängigkeit von drei Modellgrößen an Stelle der hier beschriebenen zwei Modellgrößen, wie z.B. in Abhängigkeit des Modellrotorwinkels und beider Modellstromkomponenten. Diese wäre dann vorteilhaft, wenn die Maschine nicht nur entlang einer festen Stromtrajektorie, sondern in einem größeren Bereich der d-q-Stromebene oder in der gesamten d-q-Stromebene betrieben werden soll, wie dies z.B. im Feldschwächbereich angewendet wird.

Zusammengefasst sind folgende Schritte durchzuführen. Zunächst werden in einem vorangestellten Offline-Vorgang folgende Schritte durchgeführt:

1. Bestimmung der Betriebspunktabhängigkeit der lokalen Admittanzparameter $Y_\Sigma$, $Y_{\Delta a}$ und $Y_{\Delta b}$ entlang der festgelegten Stromtrajektorie und in deren Umgebung. Dies kann vorteilhafterweise offline für ein einzelnes Exemplar eines Motortyps auf einem Prüfstand mit Rotorlagemessmitteln geschehen.

2. Bestimmung der Differentiale der offline gemessenen Admittanzparameter nach der Rotorstellung. 3. Festlegung der Tabelleninhalte für die Gewichtsfaktoren $G_\Sigma$, $G_{\Delta a}$ und $G_{\Delta b}$ sowie des Terms $F_0$ für alle Betriebspunkte.

Die anschließend durchzuführende drehgeberlose Rotorlagebestimmung umfasst im Online-Betrieb folgende Schritte, wie in Figur 2 dargestellt:

1. Messung der lokalen Admittanzparameter $Y_\Sigma$, $Y_{\Delta a}$ und $Y_{\Delta b}$ unter Verwendung einer geeigneten Hochfrequenz-Injektionsspannung.

2. Bestimmung der aktuellen Werte für die Gewichtsfaktoren $G_\Sigma$, $G_{\Delta a}$ und $G_{\Delta b}$ indem in Abhängigkeit der momentanen Modellgrößen $i_{q,mod}$ und $\theta_{r,mod}$ auf die zuvor festgelegten Tabellen zugegriffen wird.

3. Bildung einer gewichteten Summe der gemessenen Admittanzparameter unter Verwendung der aktuellen Gewichtsfaktoren.

4. Bestimmung des aktuellen Wertes für den abzuziehenden Term $F_0$ in Abhängigkeit der momentanen Modellgrößen.

5. Bildung des Fehlersignals $\delta_F$ durch Abziehen des Terms $F_0$ von der gewichteten Summe.

6. Zuführen des Fehlersignals $\delta_F$ in einen Regelkreis oder ein Grundwellen-Maschinenmodell.

7. Nachführen des Modellrotorwinkels $\theta_{r,mod}$, indem das Fehlersignal $\delta_F$ zu Null hingeregelt wird.

8. Zyklische Wiederholung der Online-Schritte 1.-7.

In **Fig. 2** ist der Signalflussplan zur drehgeberlosen Regelung einer Drehfeldmaschine **111** dargestellt. Die Drehfeldmaschine **111** wird von der Leistungsendstufe **109** eines Wechselrichters gespeist. Die zur Drehfeldmaschine fließenden Ströme werden über eine zwei- oder dreiphasige Stromerfassung **110** gemessen.

In Abhängigkeit des vom gewünschten Drehmoment abhängenden Soll-q-Stroms $i_{q,soll}$ wird entsprechend (14) oder (15) der zugehörige Soll-d-Strom $i_{d,soll}$ über die MTPA-Kennlinie **103** bestimmt und der sich daraus ergebende Soll-Stromzeiger in Modell-Rotorkoordinaten $i^r_{soll}$ dem Soll-Ist-Vergleich **104** zugeführt. Der Ist-Stromzeiger in Modell-Rotorkoordinaten $i^r_{mod}$ entsteht durch die Rücktransformation **107** aus dem Ist-Stromzeiger in Statorkoordinaten $i^s$ unter Verwendung des Modell-Rotorwinkels $\theta_{r,mod}$.

Der Stromregler **105** erzeugt die Grundwellenspannung in Modell-Rotorkoordinaten $u_{\mathrm{f}}^{\mathrm{r}}$ und führt so den Ist-Stromzeiger $i_{\mathrm{mod}}^{\mathrm{r}}$ dem Soll-Stromzeiger $i_{\mathrm{soll}}^{\mathrm{r}}$ nach. Mittels der Transformations-Einrichtung **106** wird die Grundwellenspannung von Modellrotorkoordinaten in Statorkoordinaten transformiert, wozu wiederum der Modell-Rotorwinkel $\theta_{\mathrm{r,mod}}$ verwendet wird.

Dem Grundwellenspannungszeiger in Statorkoordinaten $u_{\mathrm{f}}^{\mathrm{s}}$ wird die Injektionsspannung $u_{\mathrm{c}}^{\mathrm{s}}$ mittels der Summation **108** additiv überlagert, wodurch die gesamte Motorspannung in Statorkoordinaten $u_{\mathrm{m}}^{\mathrm{s}}$ entsteht, welche von der Leistungs-Endstufe **109** verstärkt und der Maschine **111** zugeführt wird. Die Addition der Injektionsspannung kann alternativ auch bereits vor der Transformation **106** in Modellrotorkoordinaten erfolgen.

Die in der Maschine fließenden Ströme werden durch die Stromerfassung **110** gemessen.

Hieraus werden in der Separationseinheit **112** sowohl der Grundwellenstrom in Statorkoordinaten $i^{\mathrm{s}}$ als auch aus den hochfrequenten Stromkomponenten die Admittanzparameter $Y_{\Sigma}$, $Y_{\Delta a}$ und $Y_{\Delta b}$ ermittelt.

Die Gewichte $G_{\Sigma}$, $G_{\Delta a}$ und $G_{\Delta b}$ zur Bildung der gewichteten Summe F werden über die Tabellen bzw. funktionalen Abbildungen **113-115** in Abhängigkeit der Modellrotorstellung $\theta_{\mathrm{r,mod}}$ und des Modell-q-Stroms $i_{\mathrm{q,mod}}$ gebildet.

Von der gebildeten gewichteten Summe F wird schließlich der Offset $F_0$ abgezogen, welcher ebenfalls in Abhängigkeit der Modellrotorstellung $\theta_{\mathrm{r,mod}}$ und des Modell-q-Stroms $i_{\mathrm{q,mod}}$ in der Tabelle bzw. funktionalen Abbildung **116** gebildet wird. Hierdurch entsteht schließlich das Fehlersignal $\delta_{\mathrm{F}}$, welches einem PLL-Regler **119** zugeführt wird. Dieser besteht üblicherweise aus der Hintereinanderschaltung eines PI-Gliedes **117** und eines I-Gliedes **118.** Der PLL-Regler führt den an seinem Ausgang entstehenden Modell-Rotorwinkel $\theta_{\mathrm{r,mod}}$ dem tatsächlichen Rotorwinkel $\theta_{\mathrm{r}}$ nach, sodass dieser schließlich im ausgeregelten Zustand mit dem tatsächlichen Rotorwinkel übereinstimmt und das Fehlersignal $\delta_{\mathrm{F}}$ dann zu Null wird. Am Ausgang des PI-Gliedes **117** steht zusätzlich ein Modellwert der elektrischen Winkelgeschwindigkeit $\omega_{\mathrm{mod}}$ zur Verfügung, welche beispielsweise als Istwert für einen überlagerten Drehzahlregelkreis verwendet werden kann.

**Bezugszeichenliste**

| | |
|---|---|
| 100 | Bildung der Admittanz-Parameter in Abhängigkeit der Modellgrößen und der tatsächlichen Rotorstellung |
| 101 | Bildung der Admittanz-Parameter in Abhängigkeit der tatsächlichen Motor-Größen |
| 102 | Transformation von Modell-Rotor-Koordinaten in tatsächliche Rotor-Koordinaten |
| 103 | MTPA-Kennlinie (Maximum-Torque-Per-Ampere) |
| 104 | Soll-Ist-Vergleich des Stromregelkreises |
| 105 | Stromregler |
| 106 | Transformation von Modell-Rotor-Koordinaten in Stator-Koordinaten |
| 107 | Rücktransformation von Stator-Koordinaten in Modell-Rotor-Koordinaten |
| 108 | Additive Aufschaltung der Injektionsspannung |
| 109 | Leistungs-Endstufe |
| 110 | Strommessung |
| 111 | Drehfeldmaschine |
| 112 | Mittel zur Bestimmung der Admittanz-Parameter und des Grundwellenstroms |
| 113 | Bildung des Gewichtsfaktors für die isotrope Admittanzkomponente |
| 114 | Bildung des Gewichtsfaktors für die anisotrope a-Admittanzkomponente |
| 115 | Bildung des Gewichtsfaktors für die anisotrope b-Admittanzkomponente |
| 116 | Bildung des abzuziehenden Offsets |
| 117 | PI-Regler des PLL-Reglers zur Bildung der Modell-Drehzahl |
| 118 | I-Regler des PLL-Reglers zur Bildung des Modell-Rotorwinkels |
| 119 | PLL-Regler (Phase-Locked-Loop) |

**Symbolverzeichnis**

| | |
|---|---|
| $D_{\Delta a}$ | Differential der anisotropen Admittanz-a-Komponente nach der Rotorstellung |
| $D_{\Delta b}$ | Differential der anisotropen Admittanz-b-Komponente nach der Rotorstellung |
| $D_{\Sigma}$ | Differential der isotropen Admittanz-Komponente nach der Rotorstellung |

$F$     Gewichtete Summe der gemessenen Admittanzkomponenten

$F_0$     Abzuziehender Offset

$G_{\Delta a}$     Gewichtsfaktor für die a-Komponente des anisotropen Admittanzanteils

$G_{\Delta b}$     Gewichtsfaktor für die b-Komponente des anisotropen Admittanzanteils

$G_{\Sigma}$     Gewichtsfaktor für den isotropen Admittanzanteil

$i_c$     Trägerstromzeiger

$i_d$ , $i_q$     Ist-Grundwellen-Stromkomponenten in Rotorkoordinaten

$i_{d,mod}$ , $i_{q,mod}$     Ist-Grundwellen-Stromkomponenten in Modell-Rotorkoordinaten

$\boldsymbol{i}_{mod}^{r}$     Ist-Grundwellen-Stromzeiger in Modell-Rotorkoordinaten

$i^s$     Ist-Grundwellen-Stromzeiger in Statorkoordinaten

$i_{d,soll}$ , $i_{q,soll}$     Soll-Stromkomponenten des Grundwellenstroms

$\boldsymbol{i}_{soll}^{r}$     Soll-Stromzeiger des Grundwellenstroms in Modell-Rotorkoordinaten

$\Delta i_{\alpha n}$ , $\Delta i_{\beta n}$     Komponenten der Stromanstiege in Statorkoordinaten

$\Delta i_{u\alpha n}$ , $\Delta i_{u\beta n}$     Komponenten der Stromanstiege in Spannungskoordinaten

$\Delta i_{\Sigma x,y}$     Stromanstiege auf Grund des isotropen Admittanzanteils

$L$     Induktivitätsmatrix in Statorkoordinaten

$L_a$     a-Komponente der Induktivitätsmatrix in Statorkoordinaten

$L_b$     b-Komponente der Induktivitätsmatrix in Statorkoordinaten

$L_{ab}$     Koppelinduktivität in Statorkoordinaten

$\Delta t$     Zeitintervall

$u_c$     Amplitude der Injektionsspannung

$u_c$     Injektionsspannungszeiger

$\boldsymbol{u}_{c}^{s}$     Injektionsspannungszeiger in Statorkoordinaten

$\boldsymbol{u}_{f}^{r}$     Grundwellen-Spannungszeiger in Modell-Rotorkoordinaten

$\boldsymbol{u}_{f}^{s}$ ,     Grundwellen-Spannungszeiger in Statorkoordinaten

$\boldsymbol{u}_{m}^{s}$ ,     Maschinenspannung in Statorkoordinaten

$y$     Admittanzmatrix in Statorkoordinaten

$Y_a$     a-Komponente der Admittanzmatrix in Statorkoordinaten

$\backslash Y_b$     b-Komponente der Admittanzmatrix in Statorkoordinaten

$Y_{ab}$     Koppeladmittanz in Statorkoordinaten

$Y_{\Delta a}$     a-Komponente des anisotropen Admittanzanteils in Statorkoordinaten

$Y_{\Delta b}$     b-Komponente des anisotropen Admittanzanteils in Statorkoordinaten

$Y_{\Sigma}$     Isotroper Admittanzanteil

$\delta_F$     Fehlersignal

$\theta_r$     Rotorposition

$\theta_{r,mod}$     Modell-Rotorposition

$\tilde{\theta}_r$     Fehler der Modell-Rotorposition

**Patentansprüche**

1.   Verfahren zur drehgeberlosen Rotorlagebestimmung einer Drehfeldmaschine (111),

> wobei die Drehfeldmaschine (111) von einem pulsweitenmoduliert betreibbaren Umrichter gespeist wird und wobei der Umrichter über einen Modellrotorwinkel und einen Modellstromzeiger der Drehfeldmaschine (111) verfügt,
> und wobei der Umrichter Messmittel aufweist, mittels derer im geregelten Betrieb mindestens zwei Messwerte erfasst werden, welche ein Maß für die lokalen Induktivitäten der Maschine darstellen,
> **wobei** eine Funktionstabelle den beiden Eingangsgrößen Modellrotorwinkel und Modellstromzeiger als Ausgangsgrößen mindestens zwei Gewichtsfaktoren zuordnet, welche sich ihrerseits aus den Differentialen von **drei** offline ermittelten lokalen Admittanzparameter bestimmen,
**dadurch gekennzeichnet, dass**
ein Fehler des Modellrotorwinkels, **also ein Fehlersignal** $\delta_F$, bestimmt wird, **indem ein** Offset $F_0$ von einem **Summensignal** F abgezogen wird, **welches eine gewichtete Summe ist, die aus den drei gemessenen Admittanzparameter und drei Gewichtsfaktoren gebildet wird,**
**wobei der Offset** $F_0$ **ebenfalls in Abhängigkeit von dem Modellrotorwinkel, also Modellrotorstellung** $\theta_{r,mod}$, **und von dem Modellstromzeiger, also Modell-q-Strom** $i_{q,mod}$, **in der Funktionstabelle (116) gebildet wird,**
**wobei das Fehlersignal** $\delta_F$ **einem PLL-Regler (119) zugeführt wird, welcher den an seinem Ausgang entstehenden Modell-Rotorwinkel** $\theta_{r,mod}$ **dem tatsächlichen Rotorwinkel** $\theta_r$ **so nachführt, dass dieser schließlich im ausgeregelten Zustand mit dem tatsächlichen Rotorwinkel übereinstimmt und das Fehlersignal** $\delta_F$ **dann zu Null wird.**

2. Verfahren nach Anspruch 1,
   **dadurch gekennzeichnet, dass**
   als Maß für die lokalen Induktivitäten die lokalen Admittanzen verwendet werden.

3. Verfahren nach Anspruch 1 oder 2
   **dadurch gekennzeichnet, dass**

   die Funktionstabelle offline, insbesondere in einem der Lagebestimmung vorangestellten Schritt, insbesondere also vor dem geregelten Betrieb, einmalig, bestimmt, insbesondere festgelegt, wird,
   so dass online, insbesondere bei der Lagebestimmung, mittels der Funktionstabelle die Zuordnung der Gewichtsfaktoren und des Offsetwerts zu den Werten der beiden Modellgrößen erfolgt.

4. Verfahren nach Anspruch 1, 2 oder 3,
   **dadurch gekennzeichnet, dass**

   zur Bestimmung der **Funktionstabelle** die lokalen Induktivitäten in Abhängigkeit von Werten der Rotorlage und des Stromzeigers bestimmt werden,
   insbesondere wobei diese Werte des Stromzeigers eine Trajektorie darstellen.

5. Verfahren nach einem der vorangegangenen Ansprüche,
   **dadurch gekennzeichnet, dass**
   **die** Zuordnung der Gewichtsfaktoren und des Offsetwerts zu den Modellgrößen vom rotorstellungsbezogenen Differential der lokalen Induktivitäten oder lokalen Admittanzen abhängt.

6. Verfahren nach einem der vorangegangenen Ansprüche,
   **dadurch gekennzeichnet, dass**
   jeder der mindestens zwei Gewichtsfaktoren als Quotient aus dem Differential eines der Maße und der quadratischen Summe aller Differentiale der Maße gebildet wird.

7. Verfahren nach einem der Ansprüche 1 bis 6,
   **dadurch gekennzeichnet, dass**
   die Zuordnung für den zu subtrahierenden Offsetwert so festgelegt wird, dass dieser gewichteten Summe dann übereinstimmt, wenn dort der tatsächliche Rotorwinkel der Maschine mit dem Modellwinkel übereinstimmt.

8. Verfahren nach einem der vorangehenden Ansprüche,
   **dadurch gekennzeichnet, dass**
   die Gewichtsfaktoren so gewählt werden, dass dasjenige Maß, welches die stärksten Exemplarstreuungen aufweist, mit einem geringeren Gewicht versehen wird oder in der gewichteten Summe nicht berücksichtigt wird.

9. Vorrichtung **mit Umrichter und Drehstrommotor, insbesondere drehgeberlosem Drehstrommotor, der von einem Umrichter, insbesondere Pulswechselrichter, gespeist wird, welcher zur Durchführung eines Verfahrens nach einem der vorangehenden Ansprüche geeignet ausgebildet ist.**

**Claims**

1. Method for determining the rotor position in an induction machine (111) without using a rotary encoder,

   the induction machine (111) being powered by a converter that can be operated in a pulsewidth-modulated manner, and the converter having a model rotor angle and a model current phasor of the induction machine (111) at its disposal,
   and the converter comprising measuring equipment by means of which at least two measured values are detected during operation under automatic control, said measured values representing a measure for the local inductances of the machine,
   a function table assigning at least two weighting factors to the two input variables of model rotor angle and model current phasor as output variables, said weighting factors in turn being determined from the differentials of three local admittance parameters ascertained offline,
   **characterised in that**
   an error in the model rotor angle, i.e. an error signal $\delta_F$, is determined by subtracting an offset $F_0$ from an aggregate signal F, which is a weighted sum generated from the three measured admittance parameters and three weighting factors,
   the offset $F_0$ likewise being generated in the function table (116) on the basis of the model rotor angle, i.e. the model rotor position $\theta_{r,mod}$, and the model current phasor, i.e. the model q-current $i_{q,mod}$,
   the error signal $\delta_F$ being supplied to a PLL controller (119), which controls the model rotor angle $\theta_{r,mod}$ produced at its output as a dependent variable of the actual rotor angle $\theta_r$ such that in the corrected state it ultimately matches the actual rotor angle and the error signal $\delta_F$ then becomes zero.

2. Method according to claim 1,
   **characterised in that**
   the local admittances are used as a measure for the local inductances.

3. Method according to either claim 1 or claim 2,
   **characterised in that**

   the function table is determined, in particular set, once when offline, in particular in a step preceding the position determination, in particular therefore before operation under automatic control,
   such that the weighting factors and the offset value are assigned to the values of the two model variables when online, in particular during the position determination, by means of the function table.

4. Method according to claim 1, claim 2 or claim 3,
   **characterised in that**

   to determine the function table, the local inductances are determined on the basis of values of the rotor position and the current phasor,
   these values of the current phasor in particular representing a trajectory.

5. Method according to any of the preceding claims,
   **characterised in that**
   the assignment of the weighting factors and the offset value to the model variables depends on the rotor-position-based differential of the local inductances or local admittances.

6. Method according to any of the preceding claims,
   **characterised in that**
   each of the at least two weighting factors is generated as a quotient of the differential of one of the measures and the quadratic sum of all the differentials of the measures.

7. Method according to any of claims 1 to 6,
   **characterised in that**
   the assignment for the offset value that is to be subtracted is set such that said weighted sum matches when the actual rotor angle of the machine matches the model angle therein.

8. Method according to any of the preceding claims,

**characterised in that**
the weighting factors are selected such that whichever measure has the highest production spread is given a lower weighting or is not taken into consideration in the weighted sum.

9. Device comprising a converter and a three-phase motor, in particular a three-phase motor not comprising a rotary encoder,
said three-phase motor being powered by a converter, in particular a pulse-controlled converter, that is configured to carry out a method according to any of the preceding claims.

**Revendications**

1. Procédé conçu pour déterminer, sans utilisation d'un encodeur rotatif, la position d'un rotor d'une machine (111) à champ tournant,

ladite machine (111) à champ tournant étant alimentée par un convertisseur actionnable avec modulation de largeurs d'impulsions, lequel convertisseur dispose d'un angle rotorique modélisé et d'un vecteur de courant modélisé de ladite machine (111) à champ tournant,
et ledit convertisseur comportant des moyens mesureurs à l'aide desquels sont détectées, en mode opérationnel régulé, au moins deux valeurs de mesure représent un critère attribué aux inductances locales de la machine, sachant qu'une table de fonctions affecte en tant que grandeurs de sortie, aux deux valeurs d'entrée que sont l'angle rotorique modélisé et le vecteur de courant modélisé, au moins deux facteurs de pondération qui se déterminent, pour leur part, sur la base des différentiels de trois paramètres d'admittances locales spécifiés hors ligne,
**caractérisé par le fait**
qu'une erreur de l'angle rotorique modélisé, c'est-à-dire un signal d'erreur $\delta_F$, est déterminé(e) en retranchant un décalage $F_0$ d'un signal de somme F qui constitue une somme pondérée formée à partir des trois paramètres d'admittances et trois facteurs de pondération mesurés,
ledit décalage $F_0$ étant également formé, dans la table de fonctions (116), d'une manière dépendant de l'angle rotorique modélisé, à savoir d'une position rotorique modélisée $\theta_{r,\,mod}$, et du vecteur de courant modélisé, à savoir d'un courant q modélisé i $_{q,\,mod}$,
sachant que le signal d'erreur $\delta_F$ est appliqué à un régulateur PLL (119) qui réajuste, en fonction de l'angle rotorique effectif $\theta_r$, l'angle rotorique modélisé $\theta_{r,\,mod}$ engendré à sa sortie, de telle sorte que ce dernier coïncide en définitive avec ledit angle rotorique effectif, à l'état régulé, et que ledit signal d'erreur $\delta_F$ devienne ensuite égal à zéro.

2. Procédé selon la revendication 1,
**caractérisé par le fait que**
les admittances locales sont utilisées en tant que critère attribué aux inductances locales.

3. Procédé selon la revendication 1 ou 2,
**caractérisé par le fait que**

la table de fonctions est déterminée une fois, en particulier fermement établie hors ligne, notamment au cours d'une étape précédant la détermination de position, c'est-à-dire, en particulier, préalablement au mode opérationnel régulé,
de façon telle que l'affectation des facteurs de pondération et de la valeur du décalage, aux valeurs des deux grandeurs modélisées, ait lieu en ligne au moyen de ladite table de fonctions, en particulier lors de ladite détermination de position.

4. Procédé selon la revendication 1, 2 ou 3,
**caractérisé par le fait que**,

pour déterminer la table de fonctions, les inductances locales sont déterminées d'une manière dépendant de valeurs du vecteur de courant, et de la position du rotor,
sachant notamment que ces valeurs dudit vecteur de courant représentent une trajectoire.

5. Procédé selon l'une des revendications précédentes,

**caractérisé par le fait que**

l'affectation des facteurs de pondération et de la valeur du décalage, aux grandeurs modélisées, est tributaire du différentiel des inductances locales ou des admittances locales, rapporté à la position du rotor.

6. Procédé selon l'une des revendications précédentes,
**caractérisé par le fait que**
chacun des facteurs de pondération, au nombre minimal de deux, est formé en tant que quotient du différentiel de l'un des critères et de la somme des carrés de tous les différentiels des critères.

7. Procédé selon l'une des revendications 1 à 6,
**caractérisé par le fait que**
l'affectation, attribuée à la valeur de décalage à retrancher, est fermement établie de façon telle que cette dernière coïncide avec la somme pondérée lorsque l'angle rotorique effectif de la machine coïncide, en l'occurrence, avec l'angle modélisé.

8. Procédé selon l'une des revendications précédentes,
**caractérisé par le fait que**
les facteurs de pondération sont choisis de telle sorte que le critère, présentant les plus fortes dispersions de spécimens, reçoive une pondération moindre ou ne soit pas pris en compte dans la somme pondérée.

9. Dispositif comprenant un convertisseur et un moteur à courant triphasé, en particulier un moteur à courant triphasé exempt d'encodeur rotatif qui est alimenté par un convertisseur, notamment un onduleur à impulsions réalisé pour se prêter à la mise en œuvre d'un procédé conforme à l'une des revendications précédentes.

Fig. 1

EP 3 729 634 B1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015217986 A1
- EP 2144362 A1
- DE 102010031323 A1

**In der Beschreibung aufgeführte Nicht-Patentliteratur**

- **W.HAMMEL.** Operating Point Dependent Anisotropies and Assessment for Position-Sensorless Control. *European Conference on Power Electronics and Application,* 05. September 2016
- **W.HAMMEL.** Operating Point Dependent Anisotropies and Assessment for Position-Sensorless Control. *European Conference on Power Electronics and Applications,* 05. September 2016
- **D. RACA.** A Comparative Analysis of Pulsating vs. Rotating Vector Carrier Signal Injection-Based Sensorless Control. *Applied Power Electronics Conference and Exposition,* 24. Februar 2008, 879-885
- **D.SCHRÖDER.** Elektrische Antriebe - Regelung von Antriebssystemen. Springer, 2009